# EUROPÄISCHE PATENTSCHRIFT

(11) **EP 3 591 482 B1**
(45) Veröffentlichungstag und Bekanntmachung des Hinweises auf die Patenterteilung: **12.06.2024**
(21) Anmeldenummer: 18181470.8
(22) Anmeldetag: 03.07.2018
(51) Int. Cl.: G05B 23/02, G06N 3/088

(54) **ÜBERWACHUNG EINER TECHNISCHEN ANLAGE**
MONITORING OF A TECHNICAL FACILITY
SURVEILLANCE D'UNE INSTALLATION TECHNIQUE

(43) Veröffentlichungstag der Anmeldung: 08.01.2020
(73) Patentinhaber: Siemens Aktiengesellschaft, 80333 München (DE)
(72) Erfinder: Bierweiler, Thomas, 76131 Karlsruhe (DE); Labisch, Daniel, 76149 Karlsruhe (DE)
(74) Vertreter: Siemens Patent Attorneys

(56) Entgegenhaltungen:
- EP-A1- 3 279 756
- US-A1- 2013 138 388
- Panu Somervuo ET AL: "Self-Organizing Maps and Learning Vector Quantization for Feature Sequences", Neural Processing Letters, 1. Oktober 1999 (1999-10-01), Seiten 151-159, XP055540386, Boston DOI: 10.1023/A:1018741720065 Gefunden im Internet: URL:http://cis.legacy.ics.tkk.fi/panus/pap ers/dtwsom.pdf

## Beschreibung

Die Erfindung betrifft ein Verfahren zur Überwachung einer technischen Anlage mit einem schrittweisen Prozessablauf nach Anspruch 1. Außerdem betrifft die Erfindung ein Computerprogramm mit durch einen Computer ausführbaren Programmcodeanweisungen nach Anspruch 3, ein Speichermedium mit einem durch einen Computer ausführbaren Computerprogramm nach Anspruch 4 und ein Computersystem nach Anspruch 5.

In fertigungstechnischen und prozesstechnischen Anlagen werden technische Abläufe häufig durch Schrittketten (Ablaufketten) oder Batch-Rezepte gesteuert. Der Ablauf der einzelnen Schritte kann sowohl produktionsbedingten als auch durch Fehler bedingten Schwankungen unterliegen. Für einen sicheren Betrieb und die Erfüllung der qualitativen Ziele ist eine Überwachung der Abläufe notwendig. Dabei müssen ungewöhnliche Abweichungen von den normalen Schwankungen unterschieden werden. Speziell in pharmazeutischen Prozessen, deren Ablauf durch biologische Prozesse bestimmt wird, kann es zudem zu starken, zeitlichen Schwankungen des Prozessablaufs kommen.

Ein gängiges Verfahren zur Überwachung von Stellgrößen und Messwerten ist die Anzeige von Zeitreihen (Trendanzeige). Die Überwachung erfolgt dabei entweder vom Benutzer, was eine große Erfahrung und hohe Aufmerksamkeit voraussetzt. Mit zunehmender Anlagengröße gerät der Benutzer dabei zwangsläufig an seine Grenzen.

Eine automatisierte Überwachung ist bisher nur eingeschränkt und mittels einer Parametrierung fester Grenzen möglich. Diese Parametrierung ist jedoch sehr aufwändig. Außerdem können Abweichungen mehrerer Größen, die sich innerhalb der parametrierten Grenzen abspielen, nicht erkannt werden.

Es sind Verfahren zur automatisierten Überwachung basierend auf selbst-organisierenden Karten bekannt.

In der EP 3 232 282 A1 ist eine Diagnoseeinrichtung zur Überwachung einer technischen Anlage mit einem Automatisierungssystem offenbart. Die Einrichtung bedient sich dabei einer selbstorganisierenden Karte zur Ermittlung einer Zeitdauer von bestimmten Ausführungsschritten der technischen Anlage.

Die EP 2 472 440 A1 offenbart ein Verfahren zur Überwachung eines Zustands einer Prozessanlage, dass sich selbstorganisierender Karten bedient.

EP 3 279 756 A1 betrifft eine Diagnoseeinrichtung sowie ein Diagnoseverfahren zur Überwachung des Betriebs einer technischen Anlage mit einem Automatisierungssystem. Bei einem Anlagenbetrieb mit wiederholt durchlaufenen Schrittketten werden Werte von Prozessvariablen, die zuvor durch Analyse eines Programms zur Ablaufsteuerung automatisch als für die Diagnose relevant bestimmt wurden, bei der Ausführung jedes Schrittes des zu prüfenden Durchlaufs ermittelt und anhand zumindest einer vorbestimmten, anhand fehlerfreier Durchläufe erlernten selbstorganisierenden Karte ausgewertet. Die automatische Vorauswahl der für die Diagnose relevanten Prozessvariablen hat den Vorteil, dass Fehldiagnosen weitgehend vermieden und die Zuverlässigkeit der Diagnoseaussage erhöht werden können.

In der EP 3 232 282 A1 ist eine Diagnoseeinrichtung zur Überwachung des Betriebs einer technischen Anlage mit einem Automatisierungssystem offenbart, wobei die Diagnoseeinrichtung einen Datenspeicher, in welchem zumindest ein den Betrieb der Anlage kennzeichnender Datensatz abspeicherbar ist, und eine Auswerteeinrichtung umfasst. Die Auswerteeinrichtung ist dabei dazu ausgebildet, durch Auswertung des Datensatzes anhand der selbstorganisierenden Karte eine Abweichung des Zeitverhaltens beim zu prüfenden Durchlauf der Schrittkette vom Zeitverhalten bei fehlerfreien Durchläufen zu detektieren und anzuzeigen.

Die referenzierten Verfahren sind jedoch ungeeignet, wenn sich lediglich die Dynamik innerhalb eines Schrittes unterscheidet, dabei sowohl die Wertebereiche als auch die auftretenden Signalwert-Kombinationen aber übereinstimmen.

Der Erfindung liegt die Aufgabe zugrunde, ein Verfahren zur Überwachung von Stellgrößen und Messwerten einer technischen Anlage anzugeben, das mit einem verhältnismäßig geringen Aufwand zuverlässig und automatisiert durchgeführt werden kann.

Die Aufgabe wird gelöst durch ein Verfahren zur Überwachung einer technischen Anlage mit einem schrittweisen Prozessablauf, insbesondere Prozessanlage, wobei historische Daten eines bereits auf der technischen Anlage wiederholt abgelaufenen Prozessschritts abrufbar und auswertbar sind, wobei der Prozessschritt eine Mehrzahl an zeitlichen Teilschritten aufweist, nach Anspruch 1.

Das Verfahren umfasst die folgenden Schritte:
a) Erfassen von Stellgrößen, Messgrößen, Entscheidungsvariablen und messbaren Störgrößen, die im Rahmen bereits erfolgter Durchläufe des Prozessschritts als historische Daten der technischen Anlage abgreifbar sind;
b) Einlernen der zuvor erfassten Daten in wenigstens eine selbstorganisierende Karte, wobei Knoten der selbstorganisierenden Karte einzelne zeitliche Teilschritte der Durchläufe des Prozessschritts repräsentieren;
c) Bestimmung eines Toleranzbereichs für die Stellgrö-ßen, Messgrößen, Entscheidungsvariablen und messbaren Störgrößen für jeden Knoten der wenigstens einen selbstorganisierenden Karte;
d) Durchführung eines neuen Durchlaufs des Prozessschritts auf der technischen Anlage und Erfassen der aktuellen Stellgrößen, Messgrößen, Entscheidungsvariablen und messbaren Störgrößen;
e) Für jeden zeitlichen Teilschritt des neu durchlaufenen Prozessschritts Ermittlung eines zu dem jeweiligen zeitlichen Teilschritt korrespondierenden Knotens der selbstorganisierenden Karte mittels eines Abstandmaßes und mittels eines Dynamic Time Warping Verfahrens;
f) Vergleich des neu durchlaufenen Prozessschritts mit der selbstorganisierenden Karte, dahingehend, ob jeder zeitliche Teilschritt des neu durchlaufenen Prozessschritts innerhalb des Toleranzbereichs des jeweiligen korrespondierenden Knotens liegt.

Anhand des Datensatzes und zumindest einer selbstorganisierenden Karte und anhand eines Programms zur Steuerung des Ablaufs wird beim Betrieb der Anlage mit wiederholt durchlaufenen Schrittketten mittels eines Dynamic Time Warping Verfahrens eine Diagnoseaussage über den Betrieb der Anlage bestimmt.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Datenbank oder ein Archiv, in dem historische Daten abgespeichert sind.

In der technischen Anlage werden technische Abläufe durch sogenannte Schrittketten, die auch als Ablaufketten bezeichnet werden können, gesteuert. Eine Schrittkette stellt eine Ablauffolge von Verarbeitungs- oder Produktionsschritten dar, die durch ein Programm zur Steuerung des Betriebsablaufs festgelegt sind. Die Werte von Prozessvariablen bei der Ausführung der einzelnen Schritte können sowohl produktionsbedingten als auch durch Fehler bedingten Schwankungen unterliegen. Die Überwachung der Schritte ist daher hilfreich zur Erkennung von Abweichungen und Fehlerfällen.

Schrittketten werden durch ein Programm zur Steuerung des Betriebsablaufs, welches beispielsweise in einem Automatisierungsgerät abläuft, implementiert. In den Schritten der Schrittketten werden üblicherweise Stellgrößen gesetzt, durch welche in den auf der Anlage ablaufenden Prozess eingegriffen wird. Der Übergang zum nächsten Schritt einer Schrittkette erfolgt entweder rein zeitgesteuert oder, was dem Regelfall entspricht, bei Erreichen bestimmter Sollwerte durch eine oder mehrere Messgrößen. Hinter den Stellgrößen und den Messgrößen, die in dem Steuerungsprogramm zur Überprüfung von Übergangsbedingungen genutzt werden, verbirgt sich Prozesswissen, das beispielsweise von einem Verfahrenstechniker oder Chemieingenieur beim Engineering des Automatisierungssystems, insbesondere bei der Erstellung des Programms zur Steuerung des Ablaufs beim Betrieb der Anlage eingebracht wurde (insbesondere mittels der Programmiersprache SFC = Sequential Function Chart).

In einem automatischen Lernvorgang wird für jeden Knoten der selbstorganisierenden Karte, die alle zum Einlernen verwendeten, fehlerfreien Durchläufe der Schrittkette repräsentiert, automatisch ein n-Tupel mit n Koordinaten bestimmt, wobei jede Koordinate für einen Wert einer Prozessvariablen, das heißt einer automatisch als für die Diagnose relevant bestimmten Stell- oder Messgröße eines beim Einlernvorgang durchlaufenden Schrittes steht.

Als Eingangsgrößen werden also beim Einlernen der selbstorganisierenden Karte die gesetzten Stellgrößen bzw. erfassten Messgrößen der einzelnen Schritte einer Schrittkette verwendet. Da die Prozessvariablen bei verschiedenen Durchläufen variieren können, selbst wenn kein Fehler auftritt, werden zum Einlernen der selbstorganisierenden Karte Werte der Prozessvariablen mehrerer gut verlaufener Durchläufe der Schrittketten als Trainingsdaten genutzt.

Die selbstorganisierende Karte speichert beim Einlernen an jedem Knoten typische Werte der Prozessvariablen für die einzelnen Schritte als Gut-Werte ab. Zu Beginn des Einlernverfahrens kann beispielsweise eine Karte der Größe 8 x 12 Knoten verwendet werden. Selbstverständlich sind auch davon abweichende Größen verwendbar. Nach dem Einlernen können die Trainingsdaten zur Überprüfung der Kartengröße genutzt werden. Ist die Karte zu groß, werden die einzelnen Knoten der Karte nicht oder nur wenige Male von den Trainingsdaten getroffen. Wenn sich eine Karte als zu groß erwiesen hatte, kann in einem nächsten Einlernvorgang eine etwas kleinere Kartengröße gewählt und der Einlernvorgang erneut gestartet werden. Wenn sich die Karte als nicht zu groß erwiesen hat, kann in einem nächsten Einlernvorgang eine größere Karte gewählt und der Einlernvorgang erneut gestartet werden. Dieser Vorgang wird solange wiederholt, bis die Grenze zu einer zu großen Karte ermittelt wurde. Die nächstkleinere, nicht zu große Karte wird genutzt.

Das Dynamic Time Warping Verfahren ist auch unter dem deutschen Namen "Dynamische Zeitnormierung" bekannt. Das Verfahren ermittelt für jeden Zeitschritt eines Datensatzes nach einem bestimmten Muster den jeweils am besten passendsten Zeitschritt eines zweiten Datensatzes.

Unter der Voraussetzung, dass historische Daten eines wiederholt abgelaufenen Prozessschritts vorhanden sind (vgl. Verfahrensschritt a), wird im Schritt b) eine selbstorganisierende Karte eingelernt. Dabei werden in den Knoten der selbstorganisierenden Karte jeweils die relevanten Signale (Stellgrößen, Messgrößen, Entscheidungsvariablen und messbaren Störgrößen) eines zeitlichen Teilschritts des gesamten Prozessschritts gespeichert. Ein Prozessschritt kann beispielsweise ein SFC-Schritt oder ein Rezepturschritt sein.

In dem Verfahrensschritt c) werden für jeden Knoten der selbstorganisierenden Karte zulässige Toleranzen für das Gesamtabstandsmaß und auch für jede einzelne Stell- bzw. Messgröße bestimmt. Die Bestimmung kann beispielsweise wie in der EP 3 232 282 A1 beschrieben erfolgen. Es ist aber beispielsweise auch möglich, einen festen prozentualen Abstandswert (z.B. 20%) vorzugeben, der als Toleranzmaß für die in den Knoten gespeicherten Daten dient.

Die eingelernte selbstorganisierende Karte mit den zulässigen Toleranzen kann beispielsweise in einer SQL-Datenbank lokal in der Anlage oder in einer Cloudumgebung gespeichert werden.

Nach dem Einlernen der Karte und der Bestimmung der Toleranzen wird der Prozessschritt erneut durchlaufen. Zum Vergleich der Daten des Prozessschrittes mit den historischen Daten wird jeder zeitliche Teilschritt mittels eines Abstandmaßes, insbesondere mittels eines euklidischen Abstandes, und mittels des Dynamic Time Warping Verfahrens mit der selbstorganisierenden Karte verglichen.

Dabei wird vorteilhafterweise zunächst der Durchlauf des Prozessschrittes bestimmt, der über alle Teilschritte hinweg betrachtet das geringste euklidische Abstandsmaß, gewichtet mittels des Dynamic Time Warping Verfahrens, im Vergleich zu dem neu durchgeführten Durchlauf des Prozessschrittes aufweist. Anschließend wird der Knoten der selbstorganisierenden Karte bestimmt, der das geringste Abstandsmaß zu dem (alten) Durchlauf des Prozessschrittes aufweist. Für nähere Informationen zu Details des Dynamic Time Warping Verfahrens sei auf die Beschreibung des Ausführungsbeispiels verwiesen.

Als Zwischenergebnis erhält man zu jedem (zeitlichen) Teilschritt des Prozessschritts einen oder mehrere dazugehörige Knoten der selbstorganisierenden Karte.

Im letzten Schritt des erfindungsgemäßen Verfahrens wird jeder zeitliche Teilschritt des neu durchgeführten Prozessschritts dahingehend überprüft, ob er in dem Toleranzbereich des jeweils zu ihm korrespondierenden Knoten der selbstorganisierenden Karte liegt. Ist dies der Fall, kann man davon ausgehen, dass der neu durchlaufene Prozessschritt einem "Gutfall" entspricht, d.h. keine Anomalien aufgetreten sind. Im umgekehrten Fall ist von einer Anomalie in der technischen Anlage auszugehen.

Insgesamt erhält man durch die Anwendung des erfindungsgemäßen Verfahrens eine Diagnoseaussage über den Betrieb der technischen Anlage.

Der Einsatz des Dynamic Time Warping Verfahrens lässt eine zeitliche Streckung des Prozesses zu. Änderungen in den Amplituden werden dagegen als Fehler erkannt. Die Kombination des Dynamic Time Warping Verfahrens mit selbstorganisierenden Karten erlaubt es, Schwellwerte für Anomalien aus historischen Daten ohne händische Parametrierung zu bestimmen, die zeitliche Abfolge eines Rezepturschritts auszuwerten und dennoch den Prozess tolerant gegenüber zeitlichen Verschiebungen bewerten zu können.

Im Gegensatz zur Simulation eines rigorosen Prozessmodells entfällt der Aufwand für die Modellierung komplett. Der Einlernvorgang der selbstorganisierenden Karte lässt sich vorteilhafterweise komplett automatisieren, sodass keine Parameter vom Anwender vorgegeben werden müssen.

Selbstverständlich bleiben Modifikationen an den Parametern möglich, sodass ein fachkundiger Anwender das Ergebnis ggf. noch verbessern könnte. Die sich ergebende Reduktion des Engineering- bzw. Inbetriebnahme-Aufwands ist die Voraussetzung für eine weite Verbreitung einer solchen Funktion. Im Gegensatz zu datenbasierten linearen dynamischen Modellen kann die selbstorganisierende Karte in Verbindung mit den Verläufen auch ein komplexes nichtlineares Verhalten abbilden. Einzige Voraussetzung dabei ist, dass die Lerndaten repräsentativ für alle im Betrieb auftretenden Fahrweisen und Ereignisse sind. Vorteilhafterweise liefert die beschriebene Funktion eine Anomalieerkennung gleich mit. Passt die Gesamtheit eines Batch/SFC-Schritts unter Berücksichtigung von zeitlichen Verschiebungen, Stauchungen und Streckungen der Ablaufgeschwindigkeit des Prozesses nicht zur selbstorganisierenden Karte, so weicht das aktuelle Verhalten vom gelernten ab. Dies kann als Anomalie gemeldet werden.

Handelt es sich dagegen doch um ein Gut-Verhalten, das lediglich nicht in den Lerndaten enthalten ist, so können die Lerndaten um neue Gut-Daten ergänzt werden und das Lernen mit dem erweiterten Datensatz wiederholt werden.

Das erfindungsgemäße Verfahren lässt sich selbstredend auch bei einer Mehrzahl von verschiedenen Prozessschritten in sequentieller oder paralleler Abarbeitungsweise durchführen.

Bei einer vorteilhaften Weiterbildung der Erfindung wird der Toleranzbereich (Verfahrensschritt c) derart automatisiert bestimmt, dass alle für das Einlernen der selbstorganisierenden Karte verwendeten historischen Daten innerhalb des Toleranzbereichs liegen. Damit lässt sich die Festlegung des Toleranzbereichs auf einfache Art und Weise vollständig automatisieren.

Die Aufgabe wird zudem gelöst durch ein Computerprogramm mit durch einen Computer ausführbaren Programmcodeanweisungen zur Implementierung des erfindungsgemäßen Verfahrens nach Anspruch 3.

Außerdem wird die Aufgabe durch ein Speichermedium mit einem durch einen Computer ausführbaren Computerprogramm gemäß Anspruch 4 und durch ein Computersystem gemäß Anspruch 5, auf dem ein erfindungsgemäßes Computerprogramm implementiert ist, gelöst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: eine prozesstechnische Anlage;
- FIG 2: einen ersten zeitlichen Verlauf zweier Durchläufe eines Prozessschritts;
- FIG 3: einen zweiten zeitlichen Verlauf zweier Durchläufe eines Prozessschritts;
- FIG 4: eine erste matrixförmige Gegenüberstellung zweier Durchläufe eines Prozessschritts; und
- FIG 5: eine zweite matrixförmige Gegenüberstellung zweier Durchläufe eines Prozessschritts.

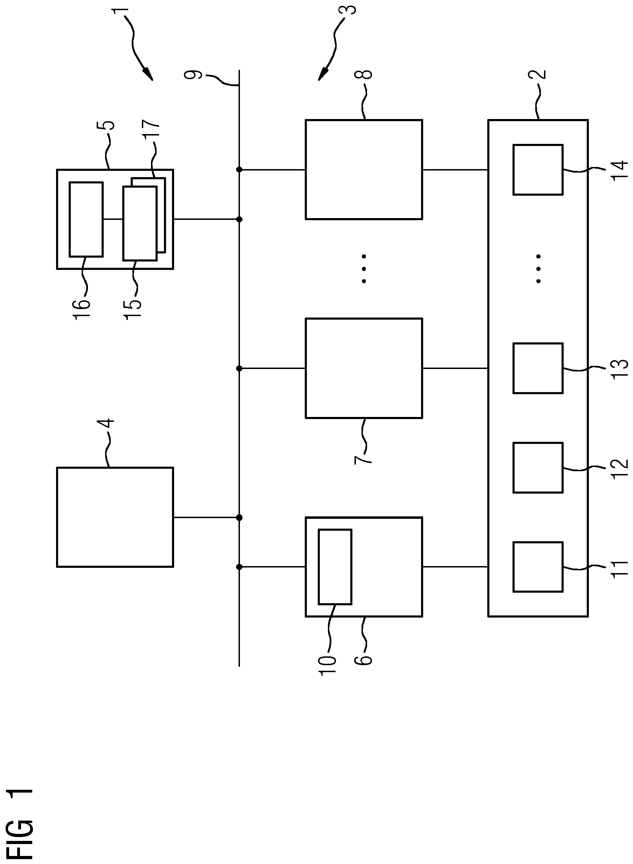

FIG 1 zeigt in vereinfachter schematischer Darstellung als Beispiel eine prozesstechnische Anlage 1, in der ein Prozess 2 mittels eines Automatisierungssystems 3 gesteuert wird. Das Automatisierungssystem 3 enthält ein Planungs- und Engineering-Werkzeug 4, ein Bedien- und Beobachtungsgerät 5 und eine Vielzahl von Automatisierungsgeräten 6, 7, 8, die über ein Bussystem 9 zur Datenkommunikation miteinander verbunden sind. Die Automatisierungsgeräte 6, 7, 8 steuern den technischen Prozess 2 nach Maßgabe von Automatisierungsprogrammen, von welchen beispielhaft in Figur 1 ein Automatisierungsprogramm 10 eingezeichnet ist. Das Automatisierungsprogramm 10 beispielsweise besteht meist aus mehreren Funktionsbausteinen, welche mit weiteren, im Automatisierungssystem 3 verteilten Funktionsbausteinen in Wechselwirkung stehen können. Zur Steuerung des Prozesses 2 werden vielfältige Feldgeräte 11, 12, 13, 14 zur Prozessinstrumentierung eingesetzt. Messumformer dienen zur Erfassung von Prozessvariablen, wie beispielsweise Temperatur, Druck, Durchflussmenge, Füllstand, Dichte oder Gaskonzentration eines Mediums. Durch Stellglieder kann der Prozessablauf in Abhängigkeit von erfassten Prozessvariablen beispielsweise den Vorgaben des Automatisierungsprogramms 10 entsprechend beeinflusst werden. Als Beispiele für Stellglieder seien ein Regelventil, eine Heizung oder eine Pumpe genannt. Zur Überwachung des Betriebs der Anlage 1 wird eine Vielzahl von Datensätzen, die für den Betrieb der Anlage kennzeichnend sind, erfasst und in einem Datenspeicher 15 abgespeichert. Mittels einer Auswerteeinrichtung 16 werden die Datensätze, die Ausführungszeiten einzelner Schritte von Schrittketten enthalten, ausgewertet, um eine Diagnoseaussage zu bestimmen und einem Bediener anzuzeigen, damit eventuell geeignete Maßnahmen zur Fehlerbehandlung getroffen werden können.

In der technischen Anlage 1 werden technische Abläufe durch Schrittketten, die auch als Ablaufketten bezeichnet werden können, gesteuert. Eine Schrittkette stellt eine Ablauffolge von Verarbeitungs- oder Produktionsschritten dar, die beispielsweise in einem Automatisierungsprogramm hinterlegt ist. Die Werte von Prozessvariablen bei der Ausführung der einzelnen Schritte können sowohl produktionsbedingten als auch durch Fehler bedingten Schwankungen unterliegen. Die Überwachung der Schritte ist daher hilfreich zur Erkennung von Abweichungen und Fehlerfällen. Zur Überwachung des Betriebs der Anlage 1 wird eine Vielzahl von Datensätzen, die für den Betrieb der Anlage 1 kennzeichnend sind, erfasst und in einem Datenspeicher 15 abgespeichert. Es sind jedoch nicht alle Prozessvariablen, die in der technischen Anlage 1 verwendet werden, hilfreich bei der Bestimmung einer zuverlässigen Diagnoseaussage.

Zur automatischen Bestimmung der für die Diagnose relevanten Prozessvariablen wird mittels einer Auswerteeinrichtung 16 ein Programm 17 zur Steuerung des Ablaufs beim Betrieb der Anlage 1 analysiert. Das Programm 17 kann beispielsweise den Quellcode der Gesamtheit der in den Automatisierungsgeräten 6, 7, 8 vorhandenen Ablaufsteuerungen entsprechen. Bei der Analyse des Programms 17 wird insbesondere ermittelt, welche Stellgrößen in Schritten der Schrittketten gesetzt und/oder welche Messgrößen in Schritten der Schrittkette zur Überprüfung einer Übergangsbedingung abgefragt werden.

Den so ermittelten Prozessvariablen wird jeweils eine Koordinate in den n-Tupeln, welche die Datensätze bilden, zugeordnet. Weiterhin können mittels der Auswerteeinrichtung 16 automatisch Ein- und Ausgangsgrößen beispielsweise von Funktionsbausteinen bestimmt werden, die für den auf der Anlage 1 ablaufenden Prozess 2 ebenfalls von Bedeutung sind und auf entsprechende Weise in die Diagnose einbezogen werden.

Mittels der Auswerteeinrichtung 16 werden zunächst Datensätze von mehreren Gutdurchläufen der Schrittkette ausgewertet und dabei eine selbstorganisierende Karte trainiert. Auf diese Weise werden an den Knoten der selbstorganisierenden Karte entsprechende n-Tupel mit vorbestimmten Werten von Prozessvariablen für fehlerfreie Durchläufe der Schrittkette erhalten. Die so vorbestimmte selbstorganisierende Karte wird im späteren Betrieb der Anlage 1 dazu verwendet, eine Diagnoseaussage über den Betrieb der Anlage 1 zu bestimmen. Dabei werden mittels der Auswerteeinrichtung 16 Datensätze, die Werte von Prozessgrößen zur jeweiligen Ausführungszeit einzelner Schritte von Schrittketten enthalten, ausgewertet. Die Diagnoseaussage kann beispielsweise in einer Logdatei archiviert und/oder einem Bediener zur Anzeige gebracht werden, damit eventuell geeignete Maßnahmen zur Fehlerbehandlung getroffen werden können.

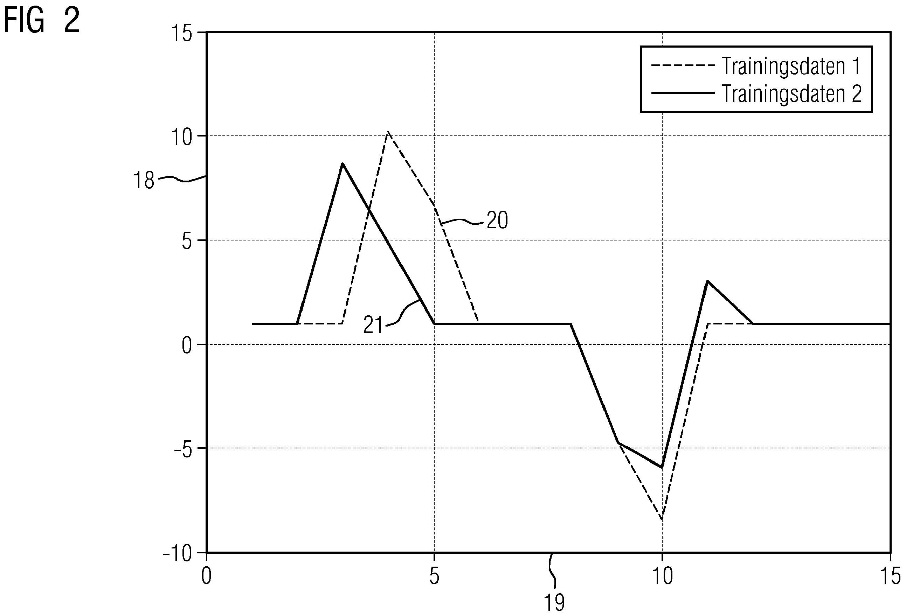

Im Folgenden wird ein beispielhaftes erfindungsgemäßes Verfahren erläutert. Im Beispiel wird nur ein Messwert eines beliebigen Prozessschritts gezeigt. Das Verfahren ist jedoch für sehr viele Messwerte geeignet. FIG 2 zeigt zwei Gut-Datensätze 20, 21 (in der Legende des in FIG 2 dargestellten Diagramms auch als Trainingsdaten 1 (Bezugszeichen 20) und Trainingsdaten 2 (Bezugszeichen 21) bezeichnet). Die Gut-Datensätze 20, 21 sind mittels einer horizontalen Zeitachse 19 (mit einer beliebigen Zeiteinheit) und einer vertikalen Werteachse 18 (mit einer beliebigen Einheit) dargestellt. Der Bereich der horizontalen Zeitachse 19 erstreckt sich von 0 bis 15, der Bereich der vertikalen Werteachse 18 von -10 bis +15.

Die Trainingsdaten 20, 21 werden erfindungsgemäß dazu genutzt, die selbstorganisierende Karte einzulernen, die Toleranzen zu bestimmen und die zeitlichen Ablaufpfade zu identifizieren.

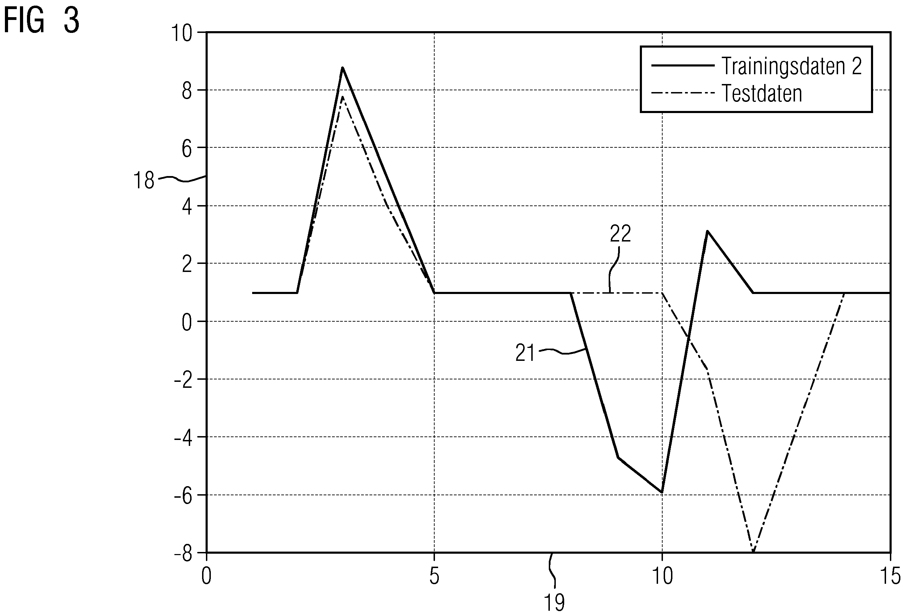

FIG 3 zeigt einen Datensatz 22 des neu durchlaufenen Prozessschritts (in der Legende als "Testdaten" bezeichnet) im Vergleich zu den Trainingsdaten 21 (bzw. "Trainingsdaten 2"). Die beiden Datensätze 21, 22 sind, vergleichbar mit FIG 2, mittels einer horizontalen Zeitachse 19 (mit einer beliebigen Zeiteinheit) und einer vertikalen Werteachse 18 (mit einer beliebigen Einheit) dargestellt. Der Bereich der horizontalen Zeitachse 19 erstreckt sich von 0 bis 15, der Bereich der vertikalen Werteachse 18 von -10 bis +15.

Im darauf folgenden Schritt wird für jeden zeitlichen Teilschritt des neu durchlaufenen Prozessschritts ein zu dem jeweiligen zeitlichen Teilschritt korrespondierender Knoten der selbstorganisierenden Karte mittels des Dynamic Time Warping Verfahrens ermittelt. Hierbei entspricht die zeitliche Einheit auf der horizontalen Achse 19 in FIG 3 einem zeitlichen Teilschritt. FIG 3 (und FIG 2) zeigt demnach fünfzehn einzelne Teilschritte der jeweiligen Datensätze 21, 22.

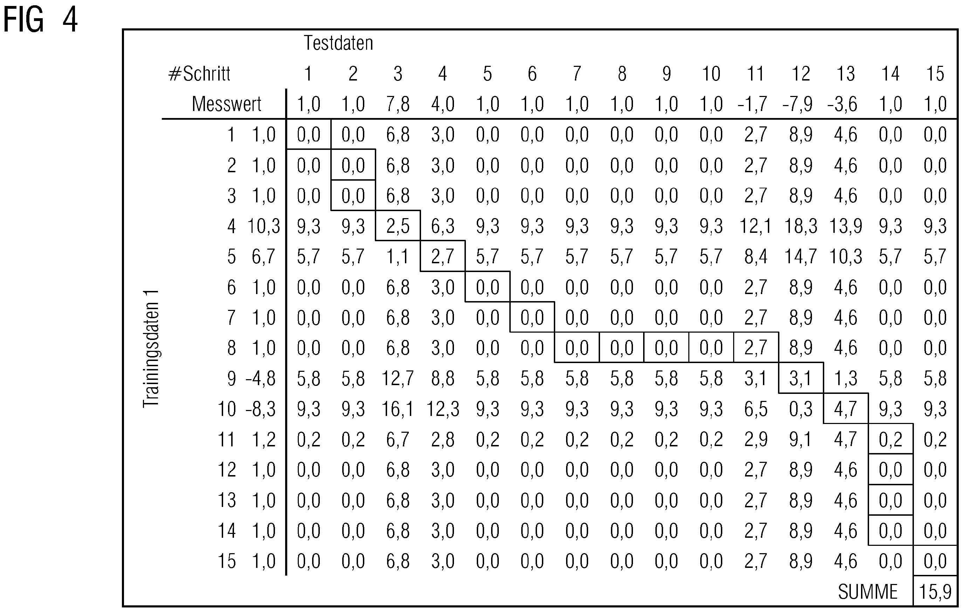

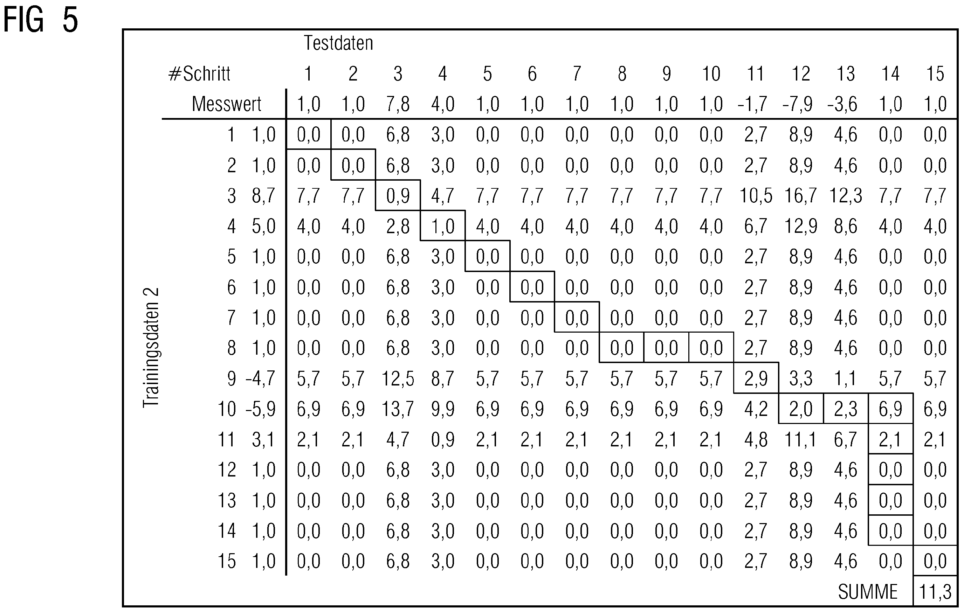

In FIG 4 und FIG 5 ist jeweils eine Datenmatrix dargestellt. In FIG 4 sind die fünfzehn einzelnen Teilschritte der Trainingsdaten 20 ("Trainingsdaten 1") und des Datensatzes 22 des neu durchlaufenen Prozessschritts ("Testdaten") gegeneinander dargestellt. Die Trainingsdaten 20 sind in der Vertikalen, der Datensatz des neu durchlaufenen Prozessschritts in der Horizontalen dargestellt. Die einzelnen Matrixelemente stellen jeweils den euklidischen Abstand zwischen den beiden Datensätzen dar.

Das Dynamic Time Warping Verfahren identifiziert anhand eines in diesem Kontext nicht näher spezifizierten Berechnungsverfahrens den zu jedem Teilschritt des Datensatzes des neu durchlaufenen Prozessschritts passenden Teilschritt der Trainingsdaten 20 (dieser ist in FIG 4 jeweils umrandet dargestellt). Eine Summenfunktion ergibt ein Gesamtabweichungsmaß des Datensatzes des neu durchlaufenen Prozessschritts von den Trainingsdaten 20.

Das zuvor anhand FIG 4 erläuterte Verfahren wird gleichsam mit den Trainingsdaten 21 durchgeführt, wobei die dazugehörige Vergleichsmatrix in FIG 5 dargestellt ist.

Ein Vergleich der beiden Gesamtabweichungen ("11,3" im Vergleich zu "15,9") ergibt, dass die Trainingsdaten 21 die geringere Abweichung gegenüber dem Datensatz des neu durchlaufenen Prozessschritts aufweisen. Die Trainingsdaten 21 werden daher als Referenzdatensatz betrachtet. Mittels einer weiteren Abstandsmaßberechnung, insbesondere mittels des euklidischen Abstandes, werden die zu den einzelnen Teilschritten der Trainingsdaten 21 jeweils am besten passendsten Knoten der selbstorganisierenden Karte identifiziert.

Im letzten Schritt werden für die einzelnen zeitlichen Teilschritte des Datensatzes des neu durchlaufenen Prozessschritts die Abweichungen von den Werten der zuvor ermittelten korrespondierenden Knoten bestimmt. Dabei wird ermittelt, ob die Werte des Datensatzes des neu durchlaufenen Prozessschritts einzeln und in Summe innerhalb des Toleranzbereichs der jeweiligen Knoten liegen. Eine Anomalie kann beispielsweise mittels einer Kostenfunktion über alle Messwerte und ein einzelnes Symptom mittels einer Abweichung der einzelnen Messwerte ermittelt werden.

Obwohl die Erfindung im Detail durch das bevorzugte Ausführungsbeispiel näher illustriert und beschrieben wurde, so ist die Erfindung nicht durch das offenbarte Beispiel eingeschränkt, und andere Variationen können vom Fachmann hieraus abgeleitet werden, ohne den durch die beigefügten Ansprüche definierten Schutzumfang der Erfindung zu verlassen.

## Patentansprüche

1. Verfahren zur Überwachung einer technischen Anlage, insbesondere Prozessanlage, wobei historische Daten eines bereits auf der technischen Anlage wiederholt abgelaufenen Prozessschritts abrufbar und auswertbar sind, wobei der Prozessschritt eine Mehrzahl an zeitlichen Teilschritten aufweist, umfassend:
a) Erfassen von Stellgrößen, Messgrößen, Entscheidungsvariablen und messbaren Störgrößen, die im Rahmen bereits erfolgter Durchläufe des Prozessschritts als historische Daten der technischen Anlage abgreifbar sind;
b) Einlernen der zuvor erfassten Daten in wenigstens eine selbstorganisierende Karte, wobei Knoten der selbstorganisierenden Karte einzelne zeitliche Teilschritte während des Durchlaufs des Prozessschritts repräsentieren;
c) Bestimmung eines Toleranzbereichs für die Stellgrö-ßen, Messgrößen, Entscheidungsvariablen und messbaren Störgrößen für jeden Knoten der wenigstens einen selbstorganisierenden Karte;
d) Durchführung eines neuen Durchlaufs des Prozessschritts auf der technischen Anlage und Erfassen der aktuellen Stellgrößen, Messgrößen, Entscheidungsvariablen und messbaren Störgrößen;
e) Bestimmen eines Durchlaufs des wiederholt abgelaufenen Prozessschrittes, der über alle zeitlichen Teilschritte hinweg betrachtet das geringste euklidische Abstandsmaß, gewichtet mittels eines Dynamic Time Warping Verfahrens, im Vergleich zu dem neu durchgeführten Durchlauf des Prozessschrittes aufweist;
f) Bestimmen des Knotens der selbstorganisierenden Karte, der das geringste euklidische Abstandsmaß zu dem Durchlauf des wiederholt abgelaufenen Prozessschrittes aufweist, um für jeden zeitlichen Teilschritt des neu durchlaufenen Prozessschrittseinen oder mehrere zu dem jeweiligen zeitlichen Teilschritt korrespondierende Knoten der selbstorganisierenden Karte zu erhalten;
g) Vergleich des neu durchlaufenen Prozessschritts mit der selbstorganisierenden Karte, dahingehend, ob jeder zeitliche Teilschritt des neu durchlaufenen Prozessschritts innerhalb des Toleranzbereichs des jeweiligen korrespondierenden Knotens liegt.

2. Verfahren nach Anspruch 1, bei dem der Toleranzbereich derart automatisiert bestimmt wird, dass alle für das Einlernen der selbstorganisierenden Karte verwendeten historischen Daten innerhalb des Toleranzbereichs liegen.

3. Computerprogramm mit durch einen Computer ausführbaren Programmcodeanweisungen zur Implementierung des Verfahrens nach einem der Ansprüche 1 bis 2.

4. Speichermedium mit einem durch einen Computer ausführbaren Computerprogramm gemäß Anspruch 3.

5. Computersystem, auf dem ein Computerprogramm nach Anspruch 3 implementiert ist.

## Claims

1. Method for monitoring a technical plant, in particular a process plant, wherein historical data of a process step that has already been repeatedly executed on the technical plant can be retrieved and evaluated, wherein the process step has a plurality of temporal sub-steps, comprising:
a) Acquisition of manipulated variables, measured variables, decision variables and measurable disturbance variables which can be tapped as historical data of the technical plant in the framework of completed passes of the process step;
b) Learning the previously acquired data in at least one self-organising map, wherein nodes of the self-organising map represent individual temporal sub-steps during the pass of the process step;
c) Determination of a tolerance range for the manipulated variables, measured variables, decision variables and measurable disturbance variables for each node of the at least one self-organising map;
d) Performance of a new pass of the process step on the technical plant and acquisition of the current manipulated variables, measured variables, decision variables and measurable disturbance variables;
e) Determining a pass of the repeatedly executed process step, which, considered across all temporal sub-steps, has the smallest Euclidean distance, weighted by means of a Dynamic Time Warping method, compared with the newly performed pass of the process step;
f) Determining the node of the self-organising map, which has the smallest Euclidean distance with respect to the pass of the repeatedly executed process step, in order to obtain one or more nodes, corresponding to the respective temporal sub-step, of the self-organising map for each temporal sub-step of the newly performed process step;
g) Comparison of the newly performed process step with the self-organising map, as to whether each temporal sub-step of the newly performed process step is within the tolerance range of the respective corresponding node.

2. Method according to claim 1, in which the tolerance range is determined in an automated manner in such a way that all historical data used for the learning of the self-organising map lies within the tolerance range.

3. Computer program with program code instructions which can be executed by a computer for implementation of the method according to one of claims 1 to 2.

4. Storage medium with a computer program according to claim 3 which can be executed by a computer.

5. Computer system on which a computer according to claim 3 is implemented.

## Revendications

1. Procédé de contrôle d'une installation technique, en particulier d'une installation de processus, dans lequel des données historiques d'un stade de processus, qui s'est déroulé déjà de manière répétée sur l'installation technique, peuvent être appelées et exploitées, dans lequel le stade de processus a une pluralité de stades partiels dans le temps, comprenant :
a) saisie de grandeurs de réglage, de grandeurs de mesure, de variables de décision et de grandeurs perturbatrices mesurables, qui peuvent, dans le cadre de passes déjà effectuées du stade de processus, être prises comme données historiques de l'installation technique ;
b) apprentissage des données saisies auparavant dans au moins une carte à auto-organisation, des noeuds de la carte à auto-organisation représentant divers stades partiels dans le temps pendant la passe du stade de processus ;
c) détermination d'une plage de tolérance pour les grandeurs de réglage, les grandeurs de mesure, les variables de décision et les grandeurs perturbatrices mesurables pour chaque noeud de la au moins une carte à auto-organisation ;
d) mise en oeuvre d'une nouvelle passe du stade de processus sur l'installation technique et saisie des grandeurs de réglage, grandeurs de mesure, variables de décision et grandeurs perturbatrices mesurables en cours ;
e) détermination d'une passe du stade de processus, qui s'est déroulée de manière répétée et qui, considéré sur tous les stades partiels dans le temps, a la mesure de distance euclidienne la plus petite, pondérée au moyen d'un procédé dynamique time warping, par rapport à la passe effectuée nouvellement du stade de processus ;
f) détermination de la carte à auto-organisation, qui a la mesure de distance euclidienne la plus petite par rapport à la passe du stade de processus, qui s'est déroulée de manière répétée, afin d'obtenir, pour chaque stade partiel dans le temps du stade de processus, qui s'est déroulé nouvellement, un ou plusieurs noeuds correspondant au stade partiel dans le temps respectif de la carte à auto-organisation ;
g) comparaison du stade de processus, qui s'est déroulé nouvellement, à la carte à auto-organisation sur le point de savoir, si chaque stade partiel dans le temps du stade de processus, qui s'est déroulé nouvellement, est dans la plage de tolérance du noeud respectif correspondant.

2. Procédé suivant la revendication 1, dans lequel on détermine la plage de tolérance de façon automatisée, de manière à ce que toutes les données historiques utilisées pour l'apprentissage de la carte à auto-organisation se trouvent dans la plage de tolérance.

3. Programme d'ordinateur comprenant des instructions de code de programme pouvant être réalisées par un ordinateur pour la mise en oeuvre du procédé suivant l'une des revendications 1 à 2.

4. Support de mémoire ayant un programme d'ordinateur pouvant être exécuté par un ordinateur suivant la revendication 3.

5. Système d'ordinateur, sur lequel un programme d'ordinateur suivant la revendication 3 est mis en oeuvre.
